# EUROPEAN PATENT APPLICATION

(11) **EP 2 536 157 A1**
(43) Date of publication of application: **19.12.2012**
(21) Application number: 12742636.9
(22) Date of filing: 24.01.2012
(51) Int. Cl.: H04N 13/00

(54) **IMAGE DATA TRANSMITTER, IMAGE DATA TRANSMISSION METHOD, IMAGE DATA RECEIVER, AND IMAGE DATA RECEPTION METHOD**

(30) Priority: 31.01.2011 JP 2011017598
(71) Applicant: Sony Corporation, Tokyo 108-0075 (JP)
(72) Inventor: KITAZATO, Naohisa, Tokyo 108-0075 (JP); TSUKAGOSHI, Ikuo, Tokyo 108-0075 (JP)
(74) Representative: Ealey, Douglas Ralph
(86) International application number: PCT/JP2012/051451
(87) International publication number: WO 2012/105376

(57) **Abstract**

[Object] To facilitate the introduction of 3D broadcasting within broadcasting with limited bandwidths such as terrestrial broadcasting.

[Solution] In addition to a base picture signal (MPEG2), there is also an expanded picture signal (AVC). The base picture signal selectively includes two-dimensional image data or left eye image data. The expanded picture signal includes right eye image data of the same or different picture format from the image data that is included in the base picture signal. Other than the same service, the obtainment source of the expanded picture signal may be another broadcasting service, a communication VOD, a communication multicast, or the like. Under a PMT, the left eye image data is included as the image data that is included in the base picture signal, and a control signal (3D system descriptor) with information indicating the obtainment source of the right eye image data (other image data) is inserted. The base picture signal includes identification information (picture 3D identification signal) that identifies whether the included image data is two-dimensional image data or left eye image data in units of frames.

## Description

### Technical Field

The present invention relates to an image data transmission device, an image data transmission method, an image data reception device, and an image data reception method, and particularly relates to an image data transmission device and the like that performs transmission of image data in which there are other pieces of image data that are linked for the purpose of stereo stereoscopic images or the like.

### Background Art

For example, a transmission system using television airwaves of stereoscopic image data has been proposed in PTL 1. In such a case, stereoscopic image data including left eye image data and right eye image data are transmitted, and stereoscopic image display using binocular parallax is performed on a television set.

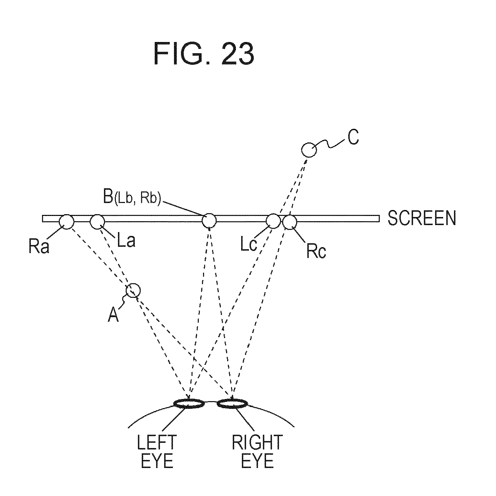

Fig. 23 illustrates the relationship between the display position of the left and right images of an object on a screen and the reproduction position of the stereoscopic image (3D image) on a stereo stereoscopic image display using binocular parallax. For example, in relation to an object A that is displayed on the screen by a left image La deviating to the right side and a right image Ra deviating to the left side as illustrated in the drawing, since the left and right lines of sight intersect in front of the screen face, the reproduction position of the stereoscopic image is in front of the screen face.

Further, for example, in relation to an object B in which a left image Lb and a right image Rb are displayed on the same position on the screen as illustrated in the drawing, since the left and right lines of sight intersect on the screen face, the reproduction position of the stereoscopic image is on the screen face. Furthermore, for example, in relation to an object C that is displayed on the screen with a left image Lc deviated to the left side and a right image Rc deviated to the right side as illustrated in the drawing, since the left and right lines of sight intersect behind the screen face, the reproduction position of the stereoscopic image is behind the screen face.

### Citation List

### Patent Literature

PTL 1: Japanese Unexamined Patent Application Publication No. 2005-6114

### Summary of Invention

### Technical Problem

With the advent of 3D TV, systems for 3D broadcasting services and 3D IPTV services are being considered. In the case of broadcasting media with the flexibility to add new 3D broadcasts to broadcast bands such as satellite broadcasts and cable TV, 3D services are being introduced through a side-by-side system that can divert existing transmission systems and receiver functions, or the like.

In terrestrial broadcasting, it is necessary for 2D broadcasting to be received by an existing 2D reception terminal, and at the same time to receive 3D broadcasting with a 3D-compatible reception terminal. That is, it is necessary for one program to be received as 2D broadcasting with an existing 2D reception terminal and as 3D broadcasting with a 3D-compatible reception terminal. However, bandwidths are limited, and broadcasting is currently transmitted by an encoding system with inferior efficiency such as MPEG2 video.

Therefore, with the side-by-side system described above, the bandwidth is insufficient. That is, in terms of the bandwidth, it is difficult to concurrently transmit the side-by-side system 3D image data and the regular 2D image data. Therefore, with terrestrial broadcasting, it is difficult to introduce 3D broadcasting.

An object of the present invention is to facilitate the introduction of 3D broadcasting within broadcasting with limited bandwidths such as terrestrial broadcasting.

### Solution to Problem

The present invention provides an image data transmission device including: a data transmission unit transmitting a transport stream including a first video data stream that includes first image data in which there is other image data that is linked for a predetermined purpose, wherein the transport stream includes the first data as image data that is included in the first video data stream, and includes a control signal with information indicating an obtainment source of the other image data.

In the present invention, the first transport stream including the first video data stream is transmitted from the data transmission unit. The first video data stream includes the first image data in which there is other image data that is linked for a predetermined purpose. For example, the predetermined purpose is a stereo stereoscopic image, and stereo stereoscopic image data is configured by the first image data and the other image data. Further, for example, the predetermined purpose is a multi-viewpoint image, a panoramic image, or the like.

The transport stream includes a control signal. The control signal includes first data as the image data included in the first video data stream, and also has information indicating the obtainment source of the other image data. For example, the transport stream includes a program map table as program specific information indicating to which program each elementary stream included in the transport stream belongs, and the control signal is inserted under the program map table.

For example, the encoding system of the first image data is MPEG2video, and the encoding system of the other image data is MPEG4-AVC. Compared to MPEG2video, MPEG4-AVC has high efficiency and can reduce the data amount. The obtainment source of the other image data is, for example, the same service, a difference service, a communication VOD, a communication multicast, or the like.

In such a manner, according to the present invention, the transport stream includes the first data as the image data included in the first video data stream, and includes a control signal with information indicating the obtainment source of the other image data. Therefore, the reception device can identify whether there is other image data that is linked for a predetermined purpose in the image data included in the first video data stream based on the control signal. Furthermore, the reception device can easily obtain the other image data based on the information indicating the obtainment source. Therefore, according to the present invention, the introduction of 3D broadcasting is facilitated for broadcasting with limited bandwidths such as, for example, terrestrial broadcasting.

Here, according to the present invention, for example, the picture format of the other image data may be the same or different from the picture format of the first image data, and the control signal may further have picture format information of the first image data and the other image data. By the control signal having the picture format information in such a manner, for example, the same picture format as the first image data or a different arbitrary picture format can be selected as the picture format of the other image data, increasing the freedom of selection of the picture format. Further, by the control signal having the picture format information in such a manner, the reception device can easily identify the picture formats of the first image data and the other image data, processing for matching the picture format of the other image data with the picture format of the first image data can be performed appropriately.

Further, according to the present invention, for example, when the obtainment source included in the control signal is the same service, the transport stream may include a second video data stream including the other image data, and the control signal may further have information indicating a combination of the first video data stream and the second video data stream. In such a case, according to the reception device, it is possible to easily know that the other image data is included in the second video data stream based on the information indicating the combination, and the other image data can be easily obtained from the second video data stream.

Further, according to the present invention, for example, the first video data stream may selectively include the first image data and the second image data in which there is no other image data that is linked, and the first video data stream may include identification information that identifies whether the included image data is the first image data or the second image data in units of frames. For example, the identification information is inserted into the header of each picture of the first video data stream. In such a case, the reception device can swiftly switch the processing based on the identification information.

The present invention also provides an image data reception device including: a data reception unit receiving a transport stream including a video data stream including first image data in which there is other image data that is linked for a predetermined purpose, wherein the transport stream includes the first data as image data included in the video data stream and includes a control signal with information indicating the obtainment source of the other image data, further including a first data obtainment unit that obtains the first image data from the transport stream received by the data reception unit, a second data obtainment unit that obtains the other image data from the obtainment source based on the control signal included in the transport stream received by the data reception unit, and a data processing unit that links and processes the first image data obtained by the first data obtainment unit and the other image data obtained by the second data obtainment unit.

According to the present invention, the transport stream including the first image data is received by the data reception unit. The first image data includes first image data in which there is other image data that is linked for a predetermined purpose. For example, the predetermined purpose is a stereo stereoscopic image, and stereo stereoscopic image data is configured by the first image data and the other image data. Further, for example, the predetermined purpose is a multi-viewpoint image, a panoramic image, or the like. A control signal is included in the transport stream. The control signal includes the first data as the image data included in the video data stream, and has information indicating the obtainment source of the other image data.

The first image data is obtained by the first data obtainment unit from the transport stream received by the data reception unit. Further, the other image data is obtained from the obtainment source by the second data obtainment unit based on a control signal included in the transport stream received by the data reception unit. For example, the obtainment source of the other image data is the same service, a different service, a communication VOD, a communication multicast, or the like. Furthermore, the first image data obtained by the first data obtainment unit and the other image data obtained by the second data obtainment unit are linked by the data processing unit and processed to accomplish the predetermined objective.

Here, according to the present invention, for example, the picture format of the other image data is the same or different from the picture format of the first image data, and a picture format adjustment unit that matches the picture format of the first image data obtained by the first data obtainment unit with the picture format of the other image data obtained by the second data obtainment unit may be further provided. In such a case, for example, even in a case where the picture format of the other image data differs from the picture format of the first image data, the picture formats can be matched.

Further, according to the present invention, for example, the video data stream may selectively include the first image data and the second image data in which there is no other image data that is linked, the video data stream may include identification information identifying whether the included image data is the first image data or the second image data in units of frames, and a control unit that controls the operations of the second data obtainment unit and the data processing unit based on the identification information included in the video data stream may be further included.

In such a manner, by controlling the operations of the second data obtainment unit and the data processing unit based on the identification information, processing can be switched swiftly between when the first image data is included in the video data stream and when the second image data is included. Furthermore, for example, when the first image data is included, processing can be performed appropriately to obtain the other image data, link the other image data with the first image data, and achieve the predetermined purpose.

### Advantageous Effects of Invention

According to the present invention, the introduction of 3D broadcasting within broadcasting with limited bandwidths such as terrestrial broadcasting is facilitated.

### Brief Description of Drawings

[Fig. 1] Fig. 1 is a block diagram that illustrates a configuration example of an image transceiving system as an embodiment of the present invention.
[Fig. 2] Fig. 2 is a block diagram that illustrates a configuration example of a transmission data generation unit in a broadcasting station.
[Fig. 3] Fig. 3 is a view that illustrates the outline of a case where the right eye image data is transmitted through the same broadcasting service (MPEG2+n/m-H AVC).
[Fig. 4] Fig. 4 is a view that illustrates the outline of a case where the right eye image data is transmitted through the same broadcasting service (MPEG2+free format AVC).
[Fig. 5] Fig. 5 is a view that illustrates the outline in a case where the right eye image data is transmitted through communication (broadcasting and communication hybrid transmission system).
[Fig. 6] Fig. 6 is a view that illustrates the entirety of the transmission information in a case where the right eye image data is transmitted through the same broadcasting service.
[Fig. 7] Fig. 7 is a view that illustrates a configuration example of a transport stream TS in a case where the right eye image data is transmitted through the same broadcasting service.
[Fig. 8] Fig. 8 is a view that illustrates the entire transmission information in a case where the right eye image data is transmitted through communication.
[Fig. 9] Fig. 9 is a view that illustrates a configuration example of the transport stream TS in a case where the right eye image data is transmitted through communication.
[Fig. 10] Fig. 10 is a view that illustrates a structure example (Syntax) of user data including a picture 3D identification signal (Stereo_Video_Format_Signaling).
[Fig. 11] Fig. 11 is a view that illustrates a structure example (Syntax) of a picture 3D identification signal

### (Stereo_Video_Format_Signaling).

[Fig. 12] Fig. 12 is a view for describing the identification information of "Stereo_Video_Format_Signaling_type" 7-bit field image data.
[Fig. 13] Fig. 13 is a view that illustrates the main data regulation content (semantics) of a structure example of the user data and the picture 3D identification signal.
[Fig. 14] Fig. 14 is a view that illustrates a structure example (Syntax) of a 3D system descriptor (Stereoscopic_video_descriptor).
[Fig. 15] Fig. 15 is a view that illustrates the main data regulation content (semantics) of a structure example of the 3D system descriptor.
[Fig. 16] Fig. 16 is a view that illustrates a structure example (Syntax) of a linked picture signal descriptor

### (combined_video_descriptor).

[Fig. 17] Fig. 17 is a view that illustrates the main data regulation content (semantics) of a structure example of the linked picture signal descriptor.
[Fig. 18] Fig. 18 is a view for describing the bit structure of an 8-bit field indicating the picture format.
[Fig. 19] Fig. 19 is a view that illustrates a structure example (Syntax) of a 3D information descriptor

### (Stereoscopic_information_descriptor).

[Fig. 20] Fig. 20 is a view that illustrates the main data regulation content (semantics) of a structure example of the 3D information descriptor.
[Fig. 21] Fig. 21 is a view that illustrates another structure example (Syntax) of the 3D system descriptor

### (Stereoscopic_video_descriptor).

[Fig. 22] Fig. 22 is a view that illustrates another structure example (Syntax) of the linked picture signal descriptor (combined_video_descriptor).
[Fig. 23] Fig. 23 is a view for describing the relationship between the display positions of the left and right images of an object on a screen and the reproduction position of a stereoscopic image thereof in a stereoscopic image display using binocular parallax.

### Description of Embodiments

Embodiment of the invention (hereinafter referred to as "embodiments") will be described below. Here, description will be made in the following order.
1. Embodiments
2. Modifications

### <1. Embodiments>

### [Configuration example of Image Transceiving System]

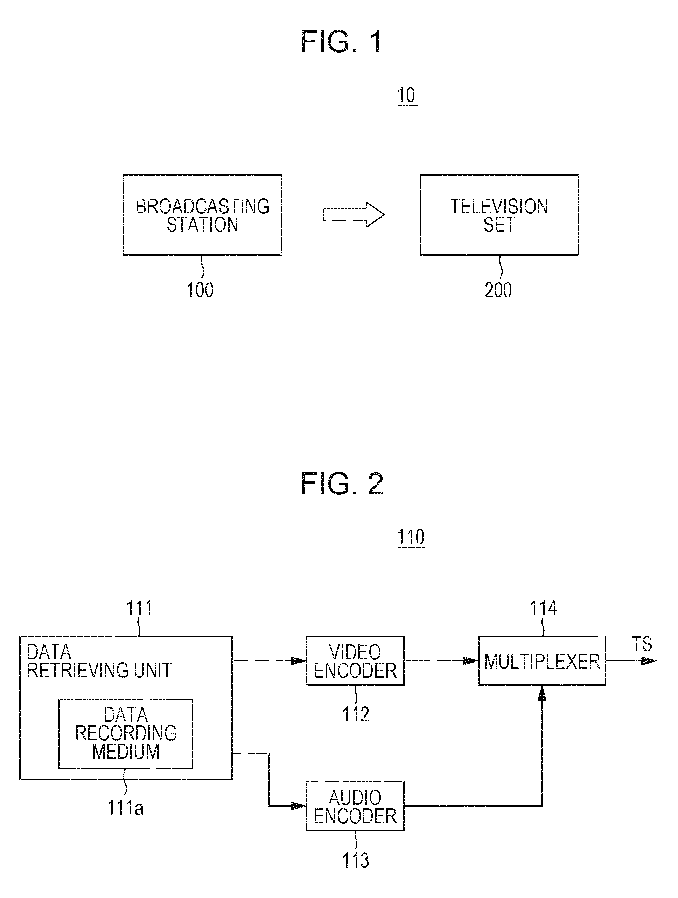

Fig. 1 illustrates a configuration example of an image transceiving system 10 as an embodiment. The image transceiving system 10 is configured by a broadcasting station 100 and a television set 200. The broadcasting station 100 transmits a transport stream using broadcasting waves. The transport stream includes a first video data stream including the image data.

The first video data stream selecting includes first image data or second image data as the image data. When the image data is the first image data, there is other image data that is linked for a predetermined purpose. According to the embodiment, the predetermined purpose is a stereo stereoscopic image, the first image data is one piece of image data configuring the stereo stereoscopic (3D) image data, for example, left eye image data, and the other image data is right eye image data configuring the stereo stereoscopic image data. Further, when the image data is the second image data, there is no other image data that is linked for a predetermined purpose, and the second image data is two-dimensional (2D) image data.

The first video data stream includes identification information identifying whether the included image data is the first image data or the second image data in units of frames. The identification information is, for example, inserted into the header of each picture of the first video data stream as user data.

The transport stream includes the first image data as the image data included in the first video data stream, and also includes a control signal with information indicating the obtainment source of the other image data that is linked to the first image data. The obtainment source is, for example, the same service (channel), another broadcasting service, a communication VOD (Video On Demand), a communication multicast, or the like. When the obtainment source is the same service, the transport stream further includes a second video data stream including the other image data. In such a case, the control signal included in the transport stream as described above has information indicating the combination (link) between the first video data stream and the second video data stream.

Here, the encoding system of the other image data included in the second video data stream is the same or different from the encoding system of the image data included in the first video data stream (first image data, second image data). According to the embodiment, the encoding system of the image data included in the first video data stream is MPEGvideo, and the encoding system of the other image data included in the second video data stream is MPEG4-AVC.

Further, the picture format of the other image data included in the second video data stream is the same or different from the picture format of the image data included in the first video data stream (first image data, second image data). Furthermore, the control signal included in the transport stream as described above has the picture format information of the respective image data.

The television set 200 receives the transport stream described above which is sent from the broadcasting station 100 using broadcasting waves. Furthermore, the television set 200 obtains image data from the transport stream. As described above, the transport stream selectively includes the first image data or the second image data as the image data.

As described above, the first video data stream includes identification information identifying whether the included image data is the first image data or the second image data in units of frames. The television set 200 identifies whether the image data obtained from the transport stream is the first image data or the second image data based on the identification information. When the obtained image data is the second image data, the television set 200 performs a display process of a two-dimensional image based on the second image data.

On the other hand, when the obtained image data is the first image data, the television set 200 performs a display process of a stereo stereoscopic image based on the first image data. As described above, the transport stream includes the first image data as the image data included in the first video data stream, and includes a control signal with information indicating the obtainment source of the other image data linked to the first image data.

The television set 200 obtains the other image data linked to the first image data for the purpose of a stereo stereoscopic image based on the obtainment source information. Furthermore, the television set 200 links the first image data with the other image data and performs a display process of a stereo stereoscopic image based thereon. For example, the television set 200 performs a process for alternately displaying a left eye image and a right eye image.

Further, as described above, the control signal has information of the picture formats of the first image data and the other image data linked to the first image data obtained from the transport stream. The television set 200 links and processes the first image data and the other image data after matching the other picture format with the picture format of the first image data based on the picture format information.

### [Structure example of Transmission Data Generation Unit]

Fig. 2 illustrates a configuration example of a transmission data generation unit 110 generating the transport stream described above in the broadcasting station 100. The transmission data generation unit 110 includes a data retrieving unit (archive unit) 111, a video encoder 112, an audio encoder 113, and a multiplexer 114.

A data recording medium 111a is fitted on the data retrieving unit 111, for example, to be detachable. Image data of a predetermined program transmitted through the transport stream along with sound data corresponding to the image data are recorded on the data recording medium 111a. As the image data, as well as two-dimensional image data, there is the other image data that configures stereo stereoscopic image data, for example, left eye image data. Here, when transmitting right eye image data corresponding to the left eye image data through the same service, there is also the right eye image data on the data recording medium 111a.

The data recording medium 111a of the data retrieving unit 111 is configured, for example, by a disk-shaped recording medium, a semiconductor memory, or the like. The data retrieving unit 111 retrieves the image data of a predetermined program from the data recording medium 111a, and retrieves and outputs the sound data recorded in association with the image data. In such a case, the image data selectively includes two-dimensional image data (second image data) or left eye image data (first image data) configuring stereo stereoscopic image data.

The video encoder 112 obtains encoded video data by encoding the image data output from the data retrieving unit 111 using MPEG2video, for example. Further, the video encoder 112 generates a first video data stream (video elementary stream) including the image data (encoded video data) through a stream formatter (not shown) provided on a latter stage.

In such a case, in the video encoder 112, the first video data stream has identification information identifying whether the image data is the first image data or the second image data in units of frames. The identification information is, for example, inserted as user data into the header of each picture of the first video data stream.

The audio encoder 113 generates an audio data stream (audio elementary stream) by encoding the sound data output from the data retrieving unit 111 using MPEG-2Audio AAC or the like. The multiplexer 114 generates a transport stream TS by packetizing and multiplexing each elementary stream generated by the video encoder 112 and the audio encoder 113.

In the multiplexer 114, the transport stream TS includes the first image data as the image data included in the first video data stream, and includes a control signal with information indicating the obtainment source of the other image data linked to the first image data. As described above, the picture format of the other image data is the same or different from the picture format of the first image data. The multiplexer 114 further causes the control signal to have the picture format information of the first image data and the second image data.

Here, the image data output from the data retrieving unit 111 is the first image data (left eye image data configuring the stereo stereoscopic image data), and when transmitting the right eye image data through the same service, the right eye image data is also output from the data retrieving unit 111 at the same time. In such a case, the video encoder 112 generates a second video data stream (video elementary stream) by encoding the right eye image data through MPEG4-AVC, for example. In the multiplexer 114, the transport stream TS also includes the second video data stream.

In such a manner, when transmitting the left eye image data through the same service, the multiplexer 114 causes the control signal to also have information indicating the combination (link) between the first video data stream and the second video data stream. For example, the information is configured using a component tag (component_tag).

### [Outline of Independent Picture Linking 3D Transmission System]

The outline of a system of transmitting, as described above, one piece of information that configures the stereo stereoscopic image data, for example, left eye image data, using a predetermined broadcasting service and transmitting the other data image that is independent therefrom, for example, right eye image data, will be described. In such a case, the right eye image data is transmitted, for example, through the same broadcasting service, another broadcasting service, a communication VOD, a communication multicast, or the like.

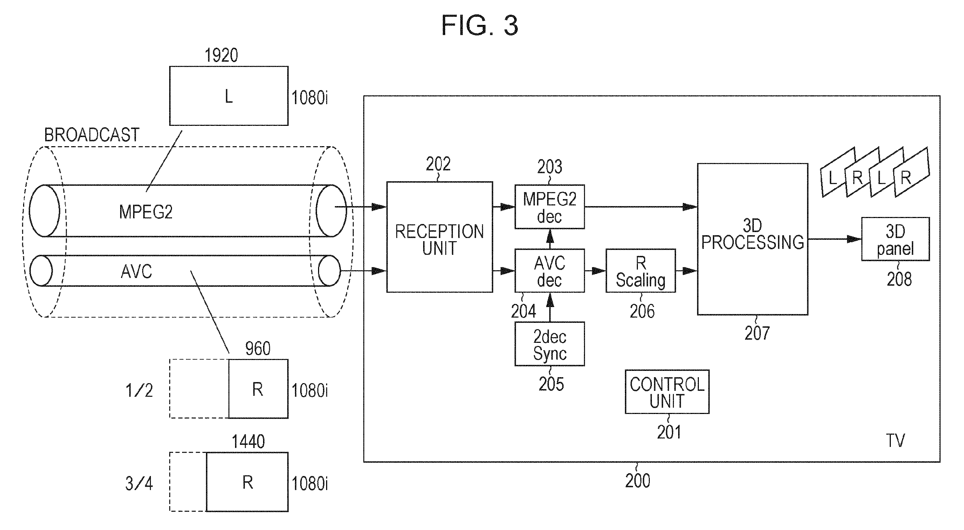

Fig. 3 illustrates the outline in a case where the right eye image data is transmitted through the same broadcasting service (MPEG2+n/m-H AVC). In such a case, the left eye image data as the first image data is a 1920×1080i picture format, and is encoded through MPEG2Vvideo. On the other hand, the right eye image data as the other image data linked to the first image data is a picture format in which the resolution in the horizontal direction is n/m (for example, 1/2, 3/4, or the like), and is encoded through MPEG4-AVC.

By lowering the resolution of the right eye image data in the horizontal direction, the data amount can be reduced, allowing the bandwidth to be economized. Here, instead of lowering the resolution in the horizontal direction, the resolution can conceivably be lowered in the vertical direction or the resolution of both can be lowered. Further, by encoding the right eye image data through MPEG4-AVC with high efficiency compared to MPEG2video, the data amount can be reduced, allowing the bandwidth to be economized.

In a case where the right eye image data is transmitted through the same broadcasting service, the television set 200 receives the transport stream TS including the first video data stream including the left eye image data and the second video data stream including the right eye image data. That is, the television set 200 includes a reception unit 202 composed of a digital tuner, a demultiplexer, and the like, and receives the transport stream TS through the reception unit 202.

Further, the television set 200 includes a control unit 201, an MPEG2video decoder 203, an MPEG4-AVC decoder 204, a synchronization unit 205, a scaling unit 206, a 3D processing unit 207, and a 3D panel 208. The control unit 201 controls the operation of each portion of the television set 200.

The decoder 203 obtains the left eye image data by performing a decoding process on the first video data stream (MPEG2video encoded data) including the left eye image data obtained by the reception unit 202. The decoder 204 obtains the right eye image data by performing a decoding process on the second video data stream (MPEG4-AVC encoded data) including the right eye image data obtained by the reception unit 202.

The synchronization unit 205 synchronizes the left eye image data obtained by the decoder 203 and the right eye image data obtained by the decoder 204. The synchronization unit 205 synchronizes the left eye image data and the right eye image data using time information for synchronized reproduction such as, for example, PTS (Presentation Time Stamp).

The scaling unit 206 performs a scaling process for matching the resolution of the right eye image data obtained by the decoder 204 in the horizontal direction with the resolution of the left eye image data obtained by the decoder 203 in the horizontal direction. In so doing, the picture format of the left eye image data and the right eye image data is 1920×1080i. Here, the scaling unit 206 configures the picture format adjustment unit.

The 3D processing unit 207 performs a display process of a stereo stereoscopic image by linking the left eye image data obtained by the decoder 203 with the right eye image data obtained by the scaling unit 206. For example, the 3D processing unit 207 alternately outputs the left eye image data and the right eye image data and alternately displays the left eye image and the right eye image on the 3D panel 208.

Here, Fig. 3 illustrates a case where the image data included in the first video data stream is the first image data. In a case where the image data included in the first video data stream is the second image data (two-dimensional image data), there is no second video data stream.

Identification information identifying whether the image data included in the first video data stream in units of frames is the first image data or the second image data, is supplied, for example, from the decoder 203 to the control unit 201 of the television set 200. The control unit 201 controls each portion of the television set 200 to be in a two-dimensional image display processing state or a stereo stereoscopic image display processing state based on the identification information. In a case where the image data included in the first video data stream is the first image data, as described above, the decoder 204 and the scaling unit 206 are in an operating state, and the 3D processing unit 207 is in a stereo stereoscopic image display processing state.

On the other hand, in a case where the image data included in the first video data stream is the second image data, the decoder 204 and the scaling unit 206 are in a non-operating state, and the 3D processing unit 207 is in a two-dimensional image display processing state. When the 3D processing unit 207 is in a two-dimensional image display processing state, two-dimensional images are sequentially displayed on the 3D panel 208.

Further, a control signal included in the transport stream TS is supplied from the reception unit 202, for example, to the control unit 201 of the television set 200. As described above, the control signal includes the picture format information of the left eye image data and the right eye image data. The control unit 201 controls the scaling process in the scaling unit 206 based on the picture format information. Further, the control signal includes information on the obtainment source of the right eye image data. The control unit 201 can ascertain that the obtainment source of the right eye image data is the same broadcasting service based on the obtainment source information.

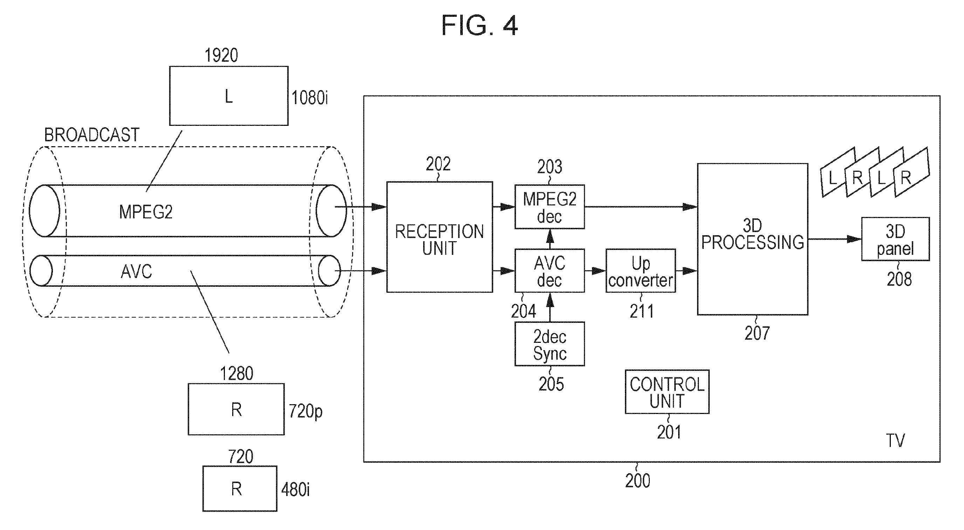

Further, Fig. 4 illustrates an outline in a case where the right eye image data is transmitted through the same service (MPEG2+free format AVC). In Fig. 4, the same symbols are given to portions corresponding to Fig. 3, and detailed description thereof is omitted as appropriate. In such a case, the left eye image data as the first image data is a 1920×1080i picture format, and is encoded through MPEG2Vvideo. On the other hand, the right eye image data as the other image data linked to the first image data is an arbitrary picture format (1280×720P, 720×480i, or the like), and is encoded through MPEG4-AVC.

By the picture format of the right eye image data having a low resolution, the data amount can be reduced and the bandwidth can be economized. Further, by encoding the right eye image data through MPEG4-AVC which has a higher efficiency than MPEG2video, the data amount can be reduced and the bandwidth can be economized.

In a case where the right eye image data is transmitted through the same broadcasting service, the television set 200 receives the transport stream TS including the first video data stream including the left eye image data and the second video data stream including the right eye image data. That is, the television set 200 includes the reception unit 202 composed of a digital tuner, a demultiplexer, and the like, and receives the transport stream TS through the reception unit 202.

Further, the television set 200 includes the control unit 201, the MPEG2video decoder 203, the MPEG4-AVC decoder 204, the synchronization unit 205, an up converter 211, the 3D processing unit 207, and the 3D panel 208. The control unit 201 controls the operation of each portion of the television set 200.

The up converter 211 performs an up conversion process for matching the picture format of the right eye image data obtained by the decoder 204 with the picture format of the left eye image data obtained by the decoder 203. In so doing, the picture formats of the left eye image data and the right eye image data are 1920×1080i. Here, the up converter 211 configures the picture format adjustment unit. Although details description will be omitted, other portions of the reception unit 200 in Fig. 4 are the same as those of the reception unit 200 in Fig. 3.

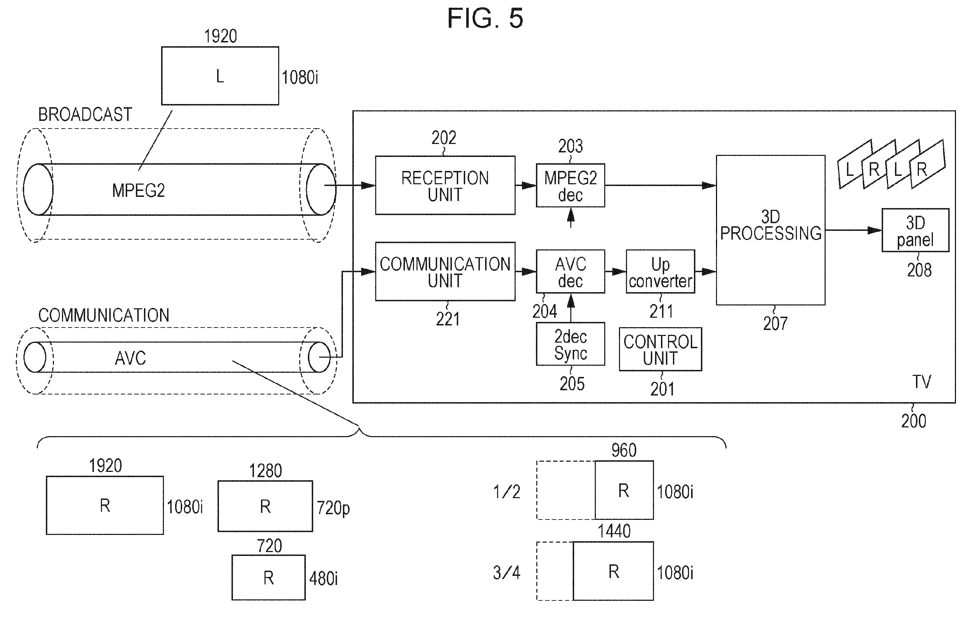

Further, Fig. 5 illustrates an outline in a case where the right eye image data is transmitted through a communication (broadcasting and communication hybrid transmission system). In Fig. 5, the same symbols are given to portions that correspond to Figs. 3 and 4, and details description thereof will be omitted as appropriate. In such a case, the left eye image data as the first image data has a 1920×1080i picture format, and is encoded through MPEG2Vvideo.

On the other hand, the right eye image data as the other image data linked to the first image data is encoded through MPEG4-AVC. Furthermore, the picture format of the right eye image data is a picture format in which the resolution in the horizontal direction is n/m (for example, 1/2, 3/4, or the like), or an arbitrary picture format (1280×720P, 720×480i, or the like).

By lowering the resolution of the right eye image data in the horizontal direction or causing the picture format thereof to have a low resolution, the data amount can be reduced and the bandwidth can be economized. Further, by encoding the right eye image data through MPEG4-AVC which has a higher efficiency than MPEG2video, the data amount can be reduced and the bandwidth can be economized.

The television set 200 includes the reception unit 202 that receives the transport stream TS including the first video data stream including the left eye image data. Further, since the right eye image data is transmitted through a communication, the televisions set 200 includes a communication unit 221 that obtains the second video data stream including the right eye image data.

Further, the television set 200 includes the control unit 201, the MPEG2video decoder 203, the MPEG4-AVC decoder 204, the synchronization unit 205, the up converter 211, the 3D processing unit 207, and the 3D panel 208. The control unit 201 controls the operation of each portion of the television set 200.

The decoder 203 obtains the left eye image data by performing a decoding process on the first video data stream (MPEG2video encoded data) including the left eye image data obtained by the reception unit 202. The decoder 204 obtains the right eye image data by performing a decoding process on the second video data stream (MPEG4-AVC encoded data) including the right eye image data obtained by the communication unit 221.

The synchronization unit 205 synchronizes the left eye image data obtained by the decoder 203 and the right eye image data obtained by the decoder 204. The synchronization unit 205 performs synchronization of the left eye image data and the right eye image data using time information for synchronized reproduction such as, for example, PTS (Presentation Time Stamp).

The up converter 211 performs an up conversion process for matching the picture format of the right eye image data obtained by the decoder 204 with the picture format of the left eye image data obtained by the decoder 203. In so doing, the picture formats of the left eye image data and the right image data are 1920×1080i. Here, the up converter 211 configures the picture format adjustment unit.

The 3D processing unit 207 links the left eye image data obtained by the decoder 203 with the right eye image data obtained by the up converter 211, and performs a display process of the stereo stereoscopic image. For example, the 3D processing unit 207 alternately outputs the left eye image data and the right eye image data, and alternately displays the left eye image and the right eye image on the 3D panel 208.

Here, Fig. 5 illustrates a case where the image data included in the first video data stream transmitted through a broadcasting service is the first image data. In a case where the image data included in the first video data stream is the second image data (two-dimensional image data), there is no second video data stream.

Identification information identifying whether the image data included in the first video data stream in units of frames is the first image data or the second image data is supplied from the decoder 203, for example, to the control unit 201 of the television set 200. The control unit 201 controls each portion of the television set 200 to be in a two-dimensional image display processing state or a stereo stereoscopic image display processing state based on the identification information. In a case where the image data included in the first video data stream is the first image data, as described above, the communication unit 221, the decoder 204, and the up converter 211 are in an operating state, and the 3D processing unit 207 is in a stereo stereoscopic image display processing state.

On the other hand, in a case where the image data included in the first video data stream is the second image data, the communication unit 221, the decoder 204, and the up converter 211 are in a non-operating state, and the 3D processing unit 207 is in a two-dimensional display processing state. When the 3D processing unit 207 is in a two-dimensional image display processing state, the 3D processing unit 207 sequentially displays a two-dimensional image on the 3D panel 208.

Further, a control signal included in the transport stream TS is supplied to the control unit 201 of the television set 200, for example, from the reception unit 202. As described above, the control signal includes the picture format information of the left eye image data and the right eye image data. The control unit 201 controls the up conversion process in the up converter 211 based on the picture format information.

Further, the control signal includes information on the obtainment source of the right eye image data. The control unit 201 can ascertain that the obtainment source of the right eye image data is a communication (communication VOD, communication multicast) based on the obtainment source information. The control unit 201 controls the operation of the communication unit 221 based on the obtainment source information.

Here, in the outlines of Figs. 3 to 5 described above, the obtainment source of the second video data stream including the right eye image data is the same broadcasting service or a communication. While not shown in the drawings, the outlines are the same even in a case where the obtainment source of the second video data stream is another broadcasting service. In such a case, the set 200 includes, in addition to the reception unit 202, a reception unit receiving the transport stream TS including the second video data stream including the right eye image data.

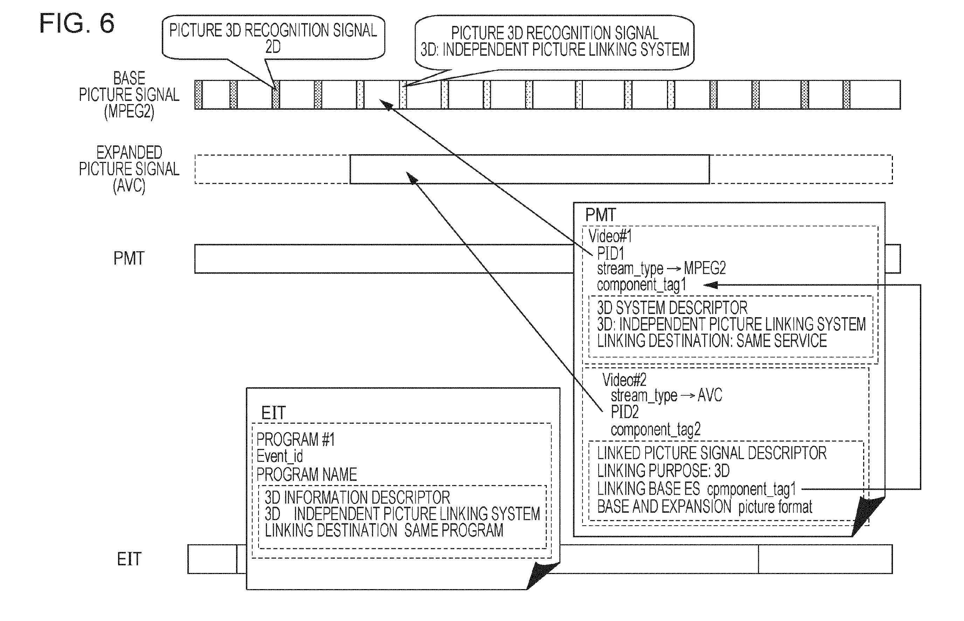

Fig. 6 illustrates the entire transmission information in a case where the right eye image data is transmitted through the same broadcasting service. Here, the "base picture signal (MPEG2)" indicates the first video data stream including left eye image data (first image data) or two-dimensional image data (second image data). Further, the "expanded picture signal (AVC)" indicates the second video data stream including the right eye image data.

Further "PMT" indicates a program map table included in the transport stream TS including the first video data stream and the second video data stream. The program map table configures program specific information that indicates the programs to which each elementary stream included in the transport stream belongs.

Further, "EIT" indicates an event information table included in the transport stream TS including the first video data stream and the second video data stream. The event information table configures service specific information that performs management in units of events. Information relating to the program such as the program name, the broadcasting time and date, and the broadcasting content is recorded in the event information table.

A picture 3D identification signal is inserted as user data into the header of each picture of the base picture signal (first video data stream). The picture 3D identification signal configures identification information identifying whether the image data included in the base picture signal is the left eye image data (first image data) or the two-dimensional image data (second image data).

When the image data included in the base picture signal is the two-dimensional image data (second image data), the picture 3D identification signal indicates a 2D picture. Further, when the image data included in the base picture signal is the left eye image data (first image data), the picture 3D identification signal indicates a 3D independent picture linking system left eye image (L picture).

Information of the base picture signal (first video data stream) and the expanded picture signal (second video data stream) is included in a video elementary loop under the program map table. That is, information such as the packet identifier (PID 1), the component tag (Component_tag1), and the stream type (Stream_type→MPEG2) is arranged in association with the base picture signal (Video#1). Furthermore, a 3D system descriptor as a control signal is arranged in association with the base picture signal (Video#1).

The fact that the 3D system descriptor is independent picture linking system 3D, that is, that 3D independent picture linking system left eye picture (L picture) data (left eye image data) is included in the base picture signal is recorded on the 3D system descriptor. Further, the linking destination information, that is, information on the obtainment source of the right eye picture (R picture) data (right eye image data) is recorded on the 3D system descriptor. Here, the linking destination (obtainment source) is the same service.

Further, information such as the packet identifier (PID2), the component tag (Component_tag2), and the stream type (Stream_type→AVC) is arranged in association with the expanded base picture signal (Video#2). Furthermore, a linked picture signal descriptor as a control signal is arranged in association with the expanded base picture signal (Video#2). It is recorded on the linked picture signal descriptor that the linking purpose is 3D (stereo stereoscopic image).

Further, information of the linking base elementary stream component tag (Component_tag1) is recorded on the linked picture signal descriptor. The information configures information indicating the combination between the base picture signal (first video data stream) and the expanded picture signal (second video data stream). Further, picture format information (picture format) of the left eye image data included in the base picture signal and the right eye image data included in the expanded picture signal are recorded on the linked picture signal descriptor.

Further, in addition to information such as the program number, the event identifier (Event_id), and the program name being arranged on the event information table, a 3D information descriptor as a control signal is also arranged. The fact that the 3D information descriptor is independent picture linking system 3D, that is, the fact that 3D independent picture linking system left eye picture (L picture) data (left eye image data) is included in the base picture signal is recorded on the 3D information descriptor. Further, the linking destination information, that is, information on the obtainment source of the right eye picture (R picture) data (right eye image data) is recorded on the 3D system descriptor. Here, the linking destination (obtainment source) is the same program (the same meaning as the same service recorded on the 3D system descriptor described above).

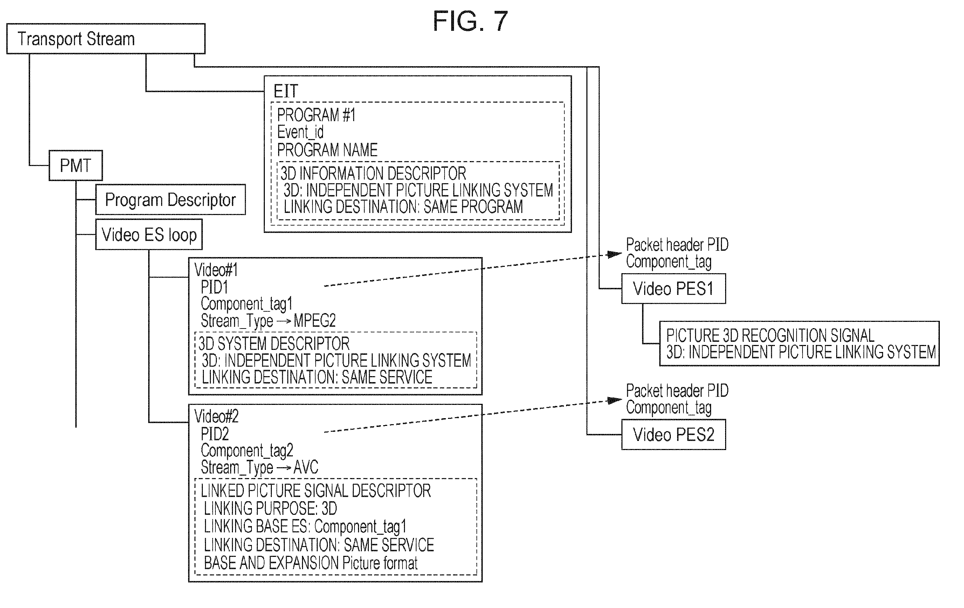

Fig. 7 illustrates a configuration example of the transport stream TS in a case where the right eye image data is transmitted through the same broadcasting service. In such a case, a PES packet "Video PES1" of the first video data stream of a base picture signal (MPEG2) is included in the transport stream TS. Further, in such a case, a PES packet "Video PES1" of the second video data stream, which is an expanded picture signal (AVC), is included in the transport stream TS. Here, in the configuration example, in order to simplify the drawing, illustration of the audio is emitted.

In the configuration example, the picture 3D identification signal described above is inserted into the first video data stream that is the base picture signal (MPEG2). As described above, the picture 3D identification signal is inserted as user data into the head of each picture.

Further, a PMT (ProgramMap Table) as PSI (Program Specific Information) is included in the transport stream TS. The PSI is information that indicates the programs to which each elementary stream included in the transport stream belongs. Further, an EIT (EventInforamtion Table) as SI (Serviced Information) performing management in units of events is included in the transport stream.

In the PMT is a program descriptor (Program Descriptor) that records information relating to the entire program. Further, in the PMT is an elementary loop with information relating to each elementary stream. In the configuration example, there is a video elementary loop (Video ES loop). Information such as the packet identifier (PID), the component tag (Component_tag), and the stream type (Stream_Type) are arranged in the video elementary loop for each stream.

The 3D system descriptor described above is arranged in association with the base picture signal (Video#1) in the video elementary loop. Further, the linked picture signal descriptor described above in association with the expanded picture signal (Video#2) is arranged in the video elementary loop. Further, the 3D information descriptor described above is arranged in the EIT.

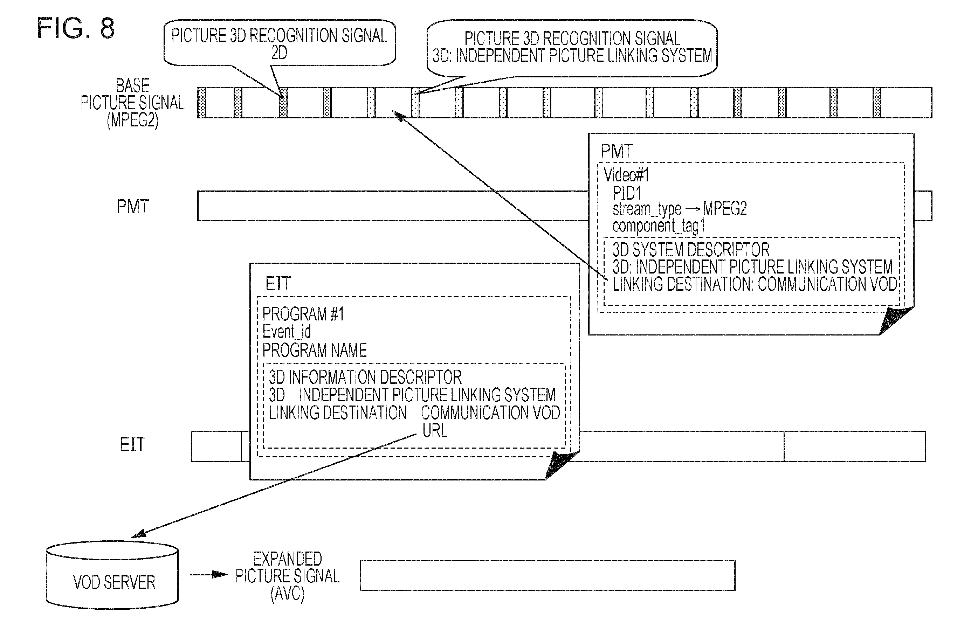

Fig. 8 illustrates the entirety of the transmission information in a case where the right eye image data is transmitted through a communication. Here, the "base picture signal (MPEG2)" indicates the first video data stream including the left eye image data (first image data) or the two-dimensional image data (second image data). Further, the "expanded picture signal (AVC) indicates the second video data stream including the right eye image data. Here, the obtainment source of the right eye image data is a communication VOD (VOD server).

Further, "PMT" indicates a program map table included in the transport stream TS including the first video data stream. Further, "EIT" indicates an event information table included in the transport stream TS including the first video data stream.

A picture 3D identification signal is inserted as user data into the header of each picture of the base picture signal (first video data stream). The picture 3D identification signal configures identification information identifying whether the image data included in the base picture signal is the left eye image data (first image data) or the two-dimensional image data (second image data).

The picture 3D identification signal indicates a 2D picture when the image data included in the base picture signal is two-dimensional image data (second image data). Further, the picture 3D identification signal indicates a 3D independent picture linking system left eye picture (L picture) when the image data included in the base picture signal is the left eye image data (first image data).

Information of the base picture signal (first video data stream) is included in the video elementary loop under the program map table. That is, information such as the packet identifier (PID1), the component tag (Component_tag1), and the stream type (Stream_Type→MPEG2) is arranged in association with the base picture signal (Video#1). Furthermore, a 3D system descriptor as a control signal is arranged in association with the base picture signal (Video#1).

The fact that the 3D system descriptor is independent picture linking system 3D, that is, that 3D independent picture linking system left eye picture (L picture) data (left eye image data) is included in the base picture signal is recorded on the 3D system descriptor. Further, the linking destination information, that is, information on the obtainment source of the right eye picture (R picture) data (right eye image data) is recorded on the 3D system descriptor. Here, the linking destination (obtainment source) is a communication VOD.

Further, in addition to information such as the program number, the event identifier (Event_id), and the program name, a 3D information descriptor as a control signal is arranged on the event information table. The fact that the 3D information descriptor is independent picture linking system 3D, that is, the fact that 3D independent picture linking system left eye picture (L picture) data (left eye image data) is included in the base picture signal is recorded on the 3D information descriptor. Further, the linking destination information, that is, information on the obtainment source of the right eye picture (R picture) data (right eye image data) is recorded on the 3D system descriptor. Here, the linking destination (obtainment source) is a communication VOD, and the URL information thereof is also recorded.

Here, the 3D information descriptor is inserted under the event information table and the fact that the linking destination (obtainment source) is a communication VOD and the URL information thereof are recorded on the 3D information descriptor for the following reason. That is, while the URL information can also conceivably be recorded on the 3D system descriptor that is inserted under the program map table described above, since the capacity of the program map table is small, if the URL information is recorded, there is a risk of overflow. Further, it is also because it is considered to be sufficient for the URL information to be recorded in units of programs.

Further, the event information table also has the objective of checking whether video recording can actually be performed when video recording in advance. By inserting the 3D information descriptor into the event information table, the 3D information descriptor can be used in 3D picture video recording checking. For example, determination such as, in a case where the independent picture linking system is 3D, video recording is possible if the linking destination (obtainment source) is within the same service but video recording is not possible in a case where the linking destination (obtainment source) is a communication VOD or a communication multicast since there is no communication function, can be made.

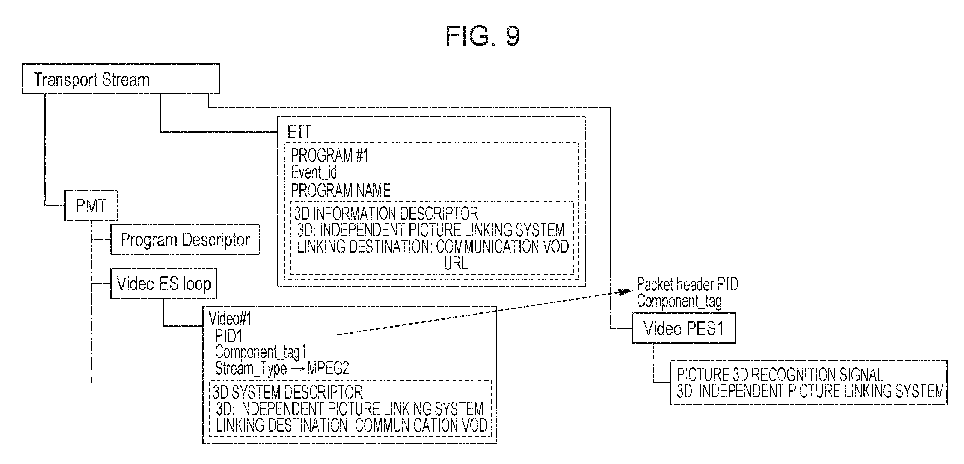

Fig. 9 illustrates a structure example of the transport stream TS in a case where the right eye image data is transmitted through a communication. In such a case, the PES packet "Video PES1" of the first video data stream that is the base picture signal (MPEG2) is included in the transport stream TS. In such a case, unlike Fig. 7 described above, the transport stream TS does not include the PES packet "Video PES1" of the second video data stream that is the expanded picture signal (AVC). Here, in the structure example, in order to simplify the drawing, illustration of the audio is omitted.

In the structure example, the picture 3D identification signal described above is inserted into the first video data time stream that is the base picture signal (MPEG2). As described above, the picture 3D identification signal is inserted as user data into the header of each picture. Further, in the structure example, the 3D system descriptor described above is arranged in association with the base picture signal (Video#1) in the video elementary loop of the PMT. Further, in the structure example, the 3D information descriptor described above is arranged in the EIT.

### [Picture 3D Identification Signal]

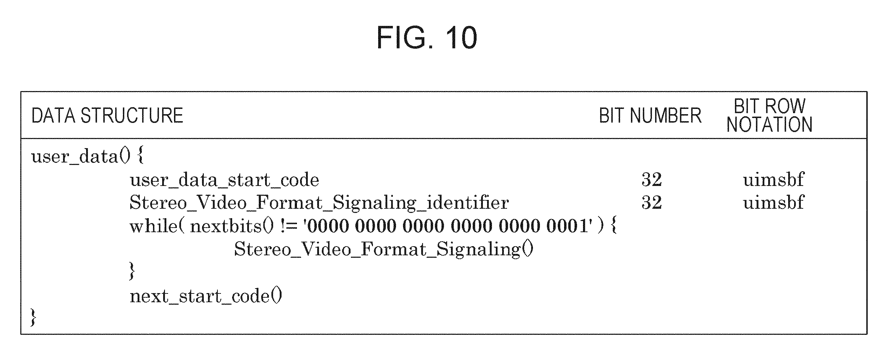

The picture 3D identification signal (Stereo_Video_Format_Signaling) inserted as user data into the header of each picture of the base picture signal (first video data stream) will be described. Fig. 10 illustrates a structure example (Syntax) of user data including the picture 3D identification signal (Stereo_Video_Format_Signaling).

The 32-bit field of "user_data_start_code" is the start code of the user data, and the fixed value "0×000001B2" is recorded. The 32-bit field of "Stereo_Video_Format_Signaling_identifier" is a data identifier, and here, the fixed value "0×4A503344" indicating the picture 3D identification signal is recorded. When the data identifier is "Stereo_Video_Format_Signaling_identifier", the picture 3D identification signal "Stereo_Video_Format_Signaling" is arranged as the subsequent data main body.

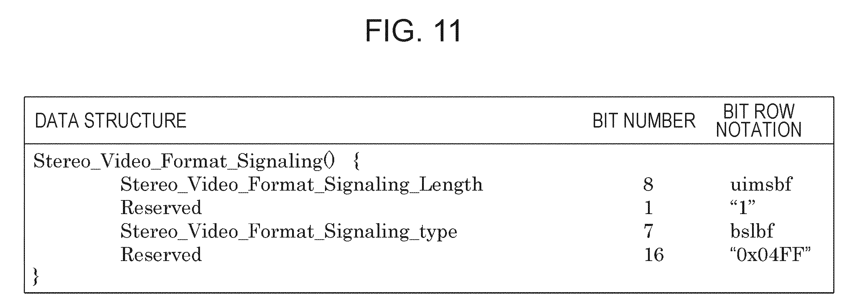

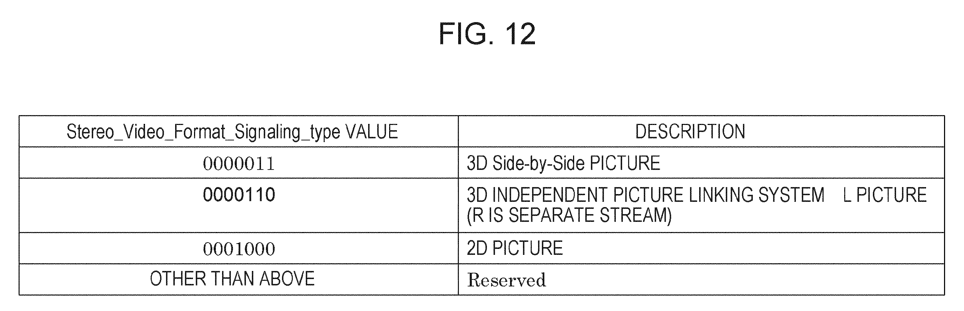

Fig. 11 illustrates a structure example (Syntax) of the picture 3D identification signal (Stereo_Video_Format_Signaling). The 8-bit field of "Stereo_Video_Format_Signling_Length" indicates the byte length of the field and thereafter, and here, the fixed value "3" is recorded. The 7-bit field of "Stereo_Video_Format_Signaling_type" is identification information for the image data. As illustrated in Fig. 12, "0000110" indicates that the image data is 3D independent picture linking system left eye picture (L picture) data. Further, "0001000" indicates that the image data is two-dimensional (2D) picture data (two-dimensional image data).

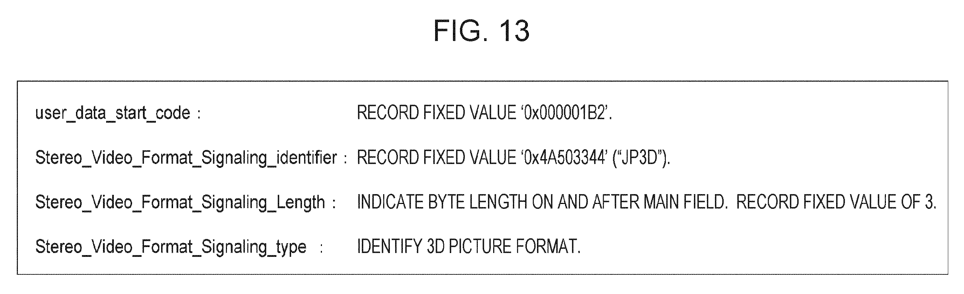

Here, Fig. 13 illustrates the main data regulation content (semantics) of the structure examples (Syntax) of Figs. 10 and 11 described above.

### [3D System Descriptor]

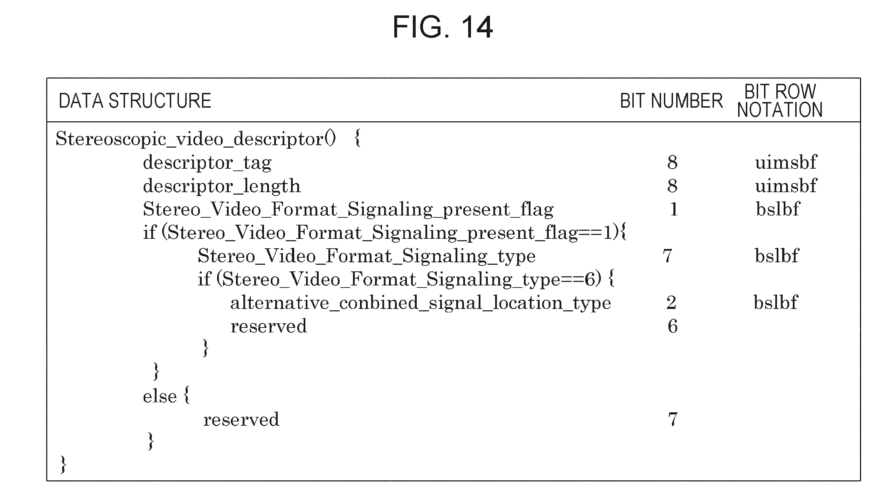

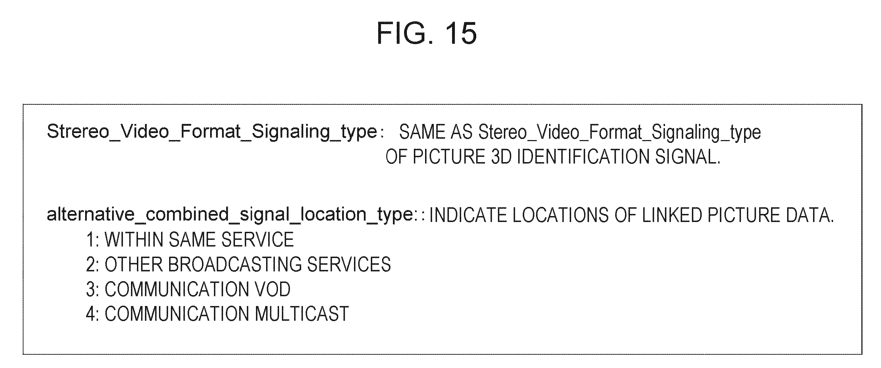

The 3D system descriptor (Stereoscopic_video_descriptor) arranged in association with the base picture signal (first video data stream) in the video elementary loop under the PMT will be described. Fig. 14 illustrates a structure example (Syntax) of the 3D system descriptor (Stereoscopic_video_descriptor). Fig. 15 illustrates the main data regulation content (semantics) of the structure example.

The 8-bit field of "descriptor_tag" is an identifier of the descriptor, and here, indicates the 3D system descriptor (Stereoscopic_video_descriptor). "descriptor_length" indicates the data length (byte number) thereafter. The 1-bit flag information of "Stereo_Video_Format_Signaling_present_flag" indicates that that the base picture signal includes the first image data in which there is other image data linked for a predetermined purpose. When the flag information is "1", there is information on the 7-bit field of "Stereo_Video_Format_Signaling_type", that is, there is information on the obtainment source of other image data. The 7-bit field is the same as the 7-bit field of "Stereo_Video_Format_Signaling_type" in the picture 3D identification signal (Stereo_Video_Format_Signaling) described above (refer to Fig. 12).

A 7-bit field of "Stereo_Video_Format_Signaling_type" of "0000110" indicates the 3D independent picture linking system left eye picture (L picture) data. At this time, there is information on the 6-bit field of "alternative_combined_signal_location_type". The information indicates the obtainment source of the linked image data, that is, the linking destination. "1" indicates that the linking destination is within the same service. "2" indicates that the linking destination is another broadcasting service. "3" indicates that the linking destination is a communication VOD. Furthermore, "4" indicates that the linking destination is a communication multicast.

### [Linked Picture Signal Descriptor]

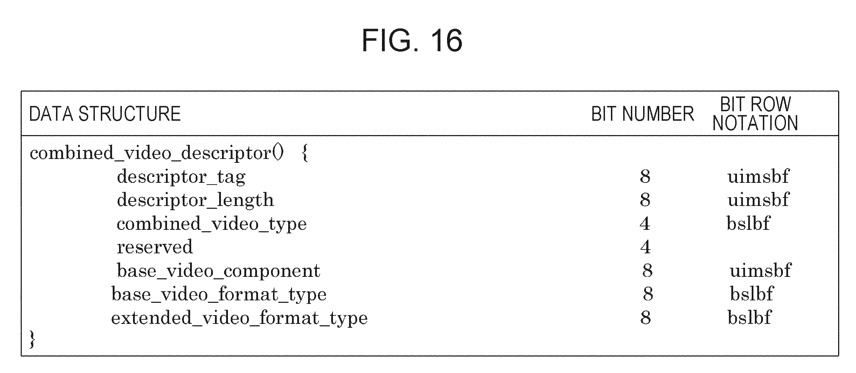

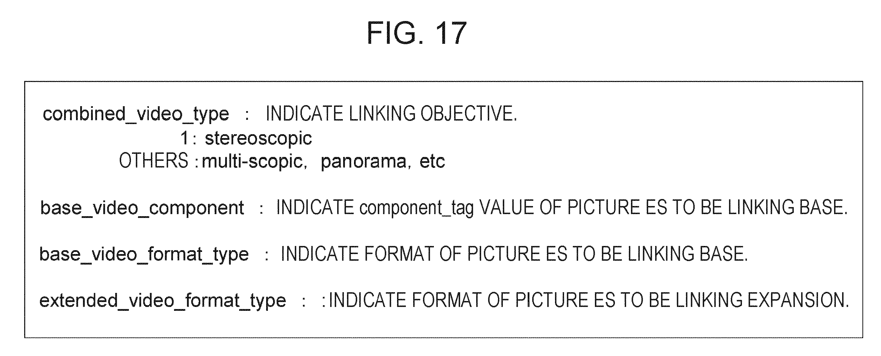

The linked picture signal descriptor (combined_video_descriptor) arranged in association with the expanded picture signal (second video data stream) in the video elementary loop under the PMT will be described. Fig. 16 illustrates a structure example (Syntax) of the linked picture signal descriptor (combined_video_descriptor). Fig. 17 illustrates the main data regulation content (semantics) of the structure example.

The 8-bit field of "descriptor_tag" is an identifier of the descriptor, and here, indicates a linked picture signal descriptor (combined_video_descriptor). " descriptor_length" indicates the data length (byte number) thereafter. "combined_video_descriptor" indicates the linking purpose. "1" indicates a stereo stereoscopic image (stereoscopic). Here, otherwise, a "multi-viewpoint image (multi-scopic), a panoramic image (panorama), and the like can be indicated as the linking purpose.

The 8-bit field of "base_video_component" indicates the value of the component tag (component_tag) of the video elementary stream (picture ES) as the linking base. The 8-bit field of "base_video_format_type" indicates the picture format of the image data included in the video elementary stream (picture ES) as the liking base. The "extended_video_format_type" 8_bit field indicates the picture format of the image data included in the video elementary stream (picture ES) as the linking extension.

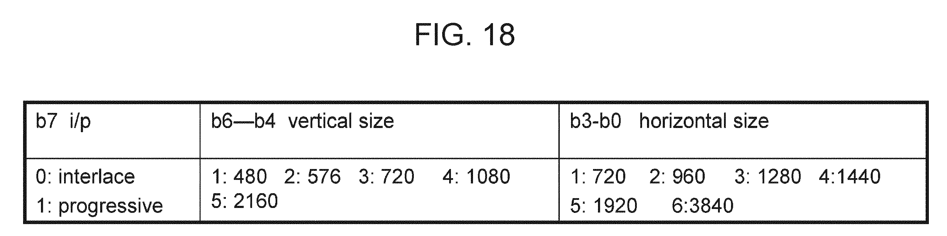

The 8-bit field indicating the picture format has the bit configuration illustrated in Fig. 18, for example. The seventh bit indicates interlacing or progressive. For example, "0" indicates interlacing and "1" indicates progressive. Further, the sixth to fourth bits indicate size in the vertical direction. For example, "1" indicates 480 pixels, "2" indicates 576 pixels, "3" indicates 720 pixels, "4" indicates 1080 pixels, and "5" indicates 2160 pixels.

Further, the third to 0th bits indicate size in the horizontal direction. For example, "1" indicates 720 pixels, "2" indicates 960 pixels, "3" indicates 1280 pixels, "4" indicates 1440 pixels, "5" indicates 1920 pixels, and "6" indicates 3840 pixels. Here, the vertical and horizontal pixel sizes are examples, and it is also possible for other sizes to be indicated.

### [3D Information Descriptor]

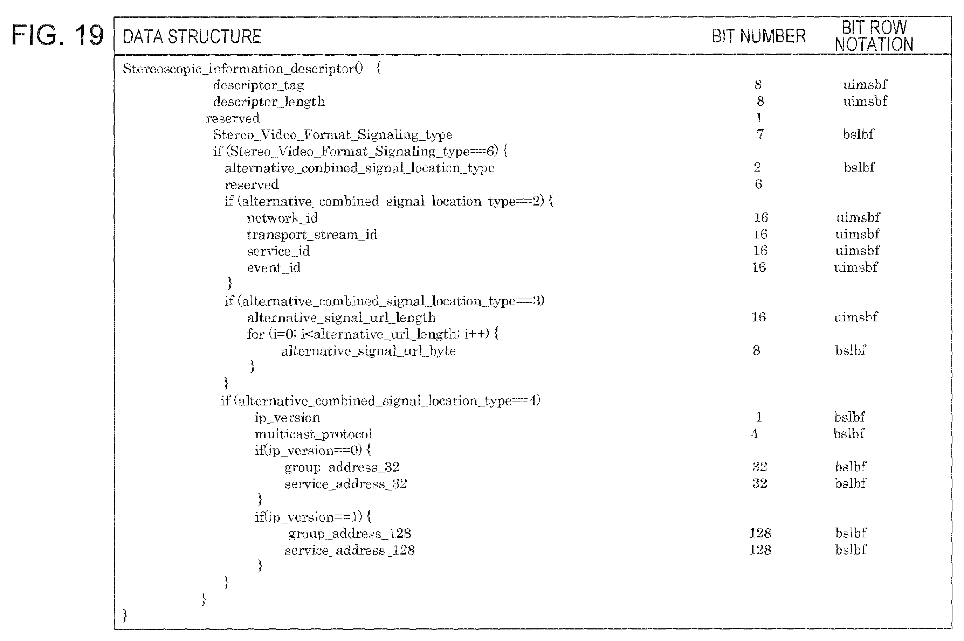

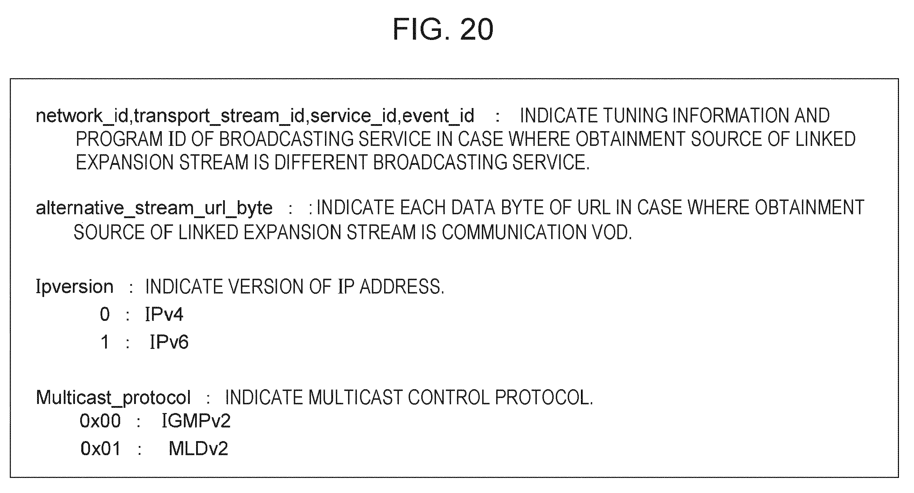

The 3D information descriptor (Stereoscopic_information_descriptor) arranged on the EIT will be described. Fig. 19 illustrates a structure example (Syntax) of the 3D information descriptor (Stereoscopic_information_descriptor). Fig. 20 illustrates the main data regulation content (semantics) of the structure example.

The 8-bit field of "descriptor_tag" is an identifier of the descriptor, and here, indicates the 3D information descriptor (Stereoscopic_information_descriptor). " descriptor_Length" indicates the data length (byte number) thereafter. The 7-bit field of "Stereo_Video_Format_Signaling_type" is the same information as that of the 3D system descriptor (Stereoscopic_video_descriptor) described above (refer to Fig. 12).

A 7-bit field of "Stereo_Video_Format_Signaling_type" of "0000110" indicates the 3D independent picture linking system left eye picture (L picture) data. At this time, there is information on the 6-bit field of "alternative_combined_signal_location_type. The 6-bit field is the same information as the 3D system descriptor ("Stereoscopic_video_descriptor) described above (refer to Fig. 15).

When the "alternative_combined_signal_location_type" 6-bit field is "000010", the linking destination is another broadcasting service. At this time, there is each piece of information of "network_id", "transport_stream_id", "service_id", and "event_id". Each piece of information indicates the tuning information and the program ID of the broadcasting service in a case where the obtainment source of the linked expanded video data stream is a different broadcasting service.

Further, when the "alternative_combined_signal_location_type" 6-bit field is "000011", the linking destination is a communication VOD. At this time, there is information on "alternative_stream_url_byte". The information on "alternative_stream_url_byte" indicates each data byte of the URL in a case where the obtainment source of the linked expanded data stream is a communication VOD. Here, the 16-bit field of "alternative_signal_url_length" indicates the data byte number of information on "alternative_stream_url_byte".

Further, when the 6-bit field of "alternative_combined_signal_location_type" is "000100", the linking destination is a communication multicast. At this time, there is information on "ip_version" and "multicast_protocol". The 1-bit field of "ip_version" indicates the version of the IP address. For example, "0" indicates IPv4 and "1" indicates IPv6. The 4-bit field of "multicast_protocol" indicates the multicast control protocol. For example, "0×00" indicates IGMPv2 and "0x01" indicates MLDv2.

When the 1-bit field of "ip_version" is "0", there are 32-bit fields of "group_address_32" and "service_address_32" indicating the IP address of the communication multicast. Further, when the 1-bit field of "ip_version" is "1", there are 128-bit fields of "group_address_128" and "service_address_128" indicating the IP address of the communication multicast.

As described above, in the image transceiving system 10 illustrated in Fig. 1, a control signal is inserted into the transport stream TS including the first video data stream including the left eye image data configuring the stereo stereoscopic image data. The control signal has information (the 3D system descriptor of the PMT and the 3D information descriptor of the EIT) indicating that the left eye image data (first image data) configuring the stereo stereoscopic image data is included as the image data included in the first video data stream. Further, the control signal also has information (linking destination of the 3D system descriptor, linking destination of the 3D information descriptor) indicating the obtainment source of the right eye image data (other image data).

Therefore, in the television set 200, it can be identified based on the control signal that the image data included in the first video data stream is the left eye image data (first image data) configuring the stereo stereoscopic image data. Further, in the television set 200, the right eye image data can be obtained easily based on the information indicating the obtainment source, and a stereo stereoscopic image display can be performed. In such a case, the obtainment source of the right eye image is not limited to the same service, may be another broadcasting service, a communication VOD, a communication multicast, or the like, and the introduction of 3D broadcasting within broadcasting with limited bandwidths such as terrestrial broadcasting is facilitated.

Further, in the image transceiving system 10 illustrated in Fig. 1, the picture format of the right eye image data included in the second video data stream is the same or different from the picture format of the left eye image data included in the first video data stream. Furthermore, the control signal inserted into the transport stream TS has information on the picture format (base and expanded picture format of linked picture signal descriptor) of the left eye image data and the right eye image data.

Therefore, as the picture format of the right eye image data, the same picture format as the left eye image data or a different arbitrary picture format can be selected, increasing the freedom of selection of the picture format. That is, by causing the picture format of the right eye image data to be a picture format with a lower resolution than the picture format of the left eye image data, it is easy to reduce the data amount of the second video data stream including the right eye image data and to economize on the bandwidth.

Further, in the television set 200, by the control signal having the picture format information, the picture format of the left eye image data received through a broadcast and the picture format of the right eye image data obtained from an obtainment source can be easily identified. Therefore, processing for matching the picture format of the right eye image data with the picture format of the left eye image data can be performed as appropriate for a stereo stereoscopic image display.

Further, in the image transceiving system 10 illustrated in Fig. 1, when the obtainment source included in the control signal is the same service, the transport stream TS includes the second video data stream including the right eye image as the other image data. Furthermore, the control signal inserted into the transport stream TS has information (component tag value of the linked base ES of the linked picture signal descriptor) indicating the combination between the first video data stream and the second video data stream.

Therefore, according to the television set 200, it can be easily ascertained that, based on the information indicating the combination, the right eye image data used linked with the left eye image data included in the first video data stream is included in the second video data stream. Furthermore, the right eye image data can be easily obtained from the second video data stream.

Further, according to the image transceiving system 10 illustrated in Fig. 1, the first video data stream selectively includes the left eye image data (first image data) configuring the stereo stereoscopic image data and the two-dimensional image data (second image data). Furthermore, the first video data stream includes the identification information (picture 3D identification signal) identifying whether the image data included in units of frames is the first image data or the second image data.

Therefore, according to the television set 200, whether the image data included in the first data stream is the first image data or the second image data can be identified in units of frames based on the identification information. Furthermore, the television set 200 can swiftly and appropriately switch between a stereo stereoscopic image display processing state and a two-dimensional image display processing state.

### <2. Modification Example>

Here, according to the embodiment described above, there is no picture formation information recorded on the 3D system descriptor arranged in association with the base picture signal (first video data stream) on the video elementary loop under the PMT. However, recording the picture format information on the 3D system descriptor can also be considered.

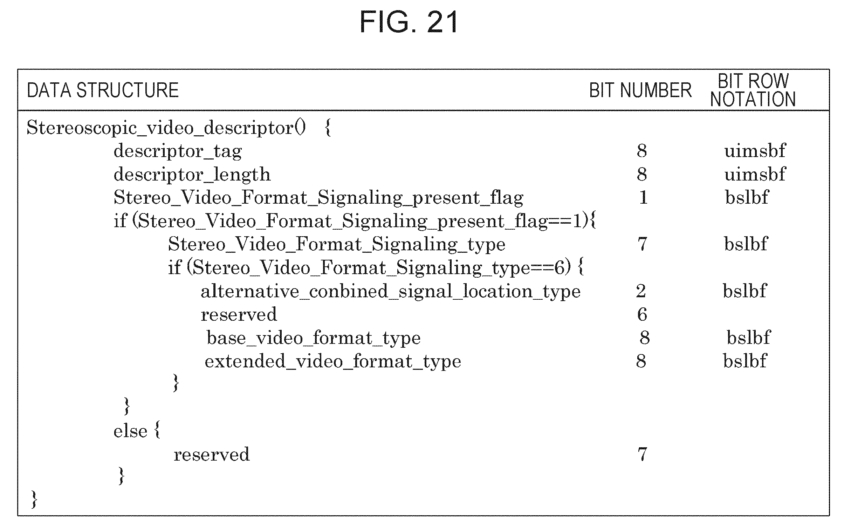

Fig. 21 illustrates a structure example (Syntax) of the 3D system descriptor (Stereoscopic_video_descriptor) in such a case. In the structure example of Fig. 21, information of "base_video_format_type and "extended_video_format_type" is further added to the structure example of Fig. 14. As described above, the 8-bit field of "base_video_format_type" indicates the picture format of the image data included in the video elementary stream (picture ES) that is the linking base. The "extended_video_format_type" 8-bit field indicates the picture format of the image data included in the video elementary stream (picture ES) that is the expansion of the link.

In such a case, even if there is no linked picture signal descriptor (refer to Fig. 16) in association with the expanded picture signal (second video data stream) in the video elementary loop under the PMT, the television set 200 can identify the picture formats of the left eye image data and the right eye image data. That is, even if the obtainment source of the right eye image data is another broadcasting service, a communication VOD, a communication multicast, or the like, the television set 200 can easily identify the picture formats of the left eye image data and the right eye image data. Furthermore, a process for matching the picture format of the right eye image data with the picture format of the left eye image data for a stereo stereoscopic image display can be performed appropriately.

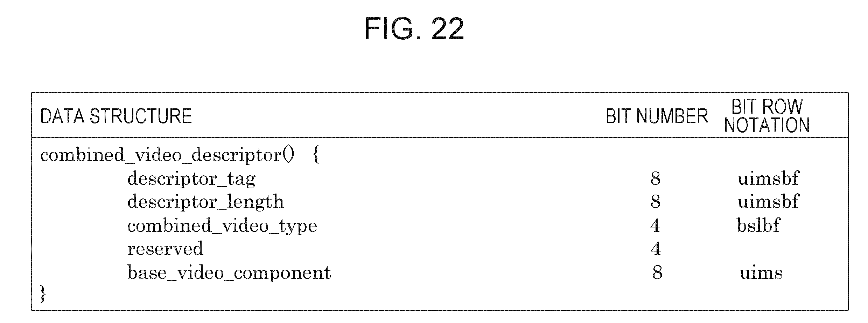

Fig. 22 illustrates a structure example (Syntax) of the linked picture signal descriptor (combined_video_descriptor) in a case where the picture format information is recorded on the 3D system descriptor as described above. In the structure example of Fig. 22, information on "base_video_format_type" and "extended_video_format_type" are removed from the structure example of Fig. 16. Since such information is recorded on the 3D system descriptor, the information is unnecessary.

Further, in the embodiment described above, an example has been shown in which the predetermined purpose is a stereo stereoscopic image, the left eye image data is included in the base picture signal (first video data stream), and the right eye image data is included in the expanded picture signal (second video data stream). Naturally, the present invention can be similarly configured even in a case where the predetermined purpose is a multi-viewpoint image, a panoramic image, or the like.

### Industrial Applicability

The present invention can be applied to an image transceiving system or the like performing image transmission for performing a stereo stereoscopic image display.

### Reference Signs List

- 10: IMAGE TRANSCEIVING SYSTEM
- 100: BROADCASTING STATION
- 110: TRANSMISSION DATA GENERATION UNIT
- 111: DATA RETRIEVING UNIT
- 111a: DATA RECORDING MEDIUM
- 112: VIDEO ENCODER
- 113: AUDIO ENCODER
- 114: MULTIPLEXER
- 200: TELEVISION SET
- 201: CONTROL UNIT
- 202: RECEPTION UNIT
- 203: MPEG2video DECODER
- 204: MPEG4-AVC DECODER
- 205: SYNCHRONIZATION UNIT
- 206: SCALING UNIT
- 207: 3D PROCESSING UNIT
- 208: 3D PANEL
- 211: UP CONVERTER
- 221: COMMUNICATION UNIT

## Claims

1. An image data transmission device comprising:
a data transmission unit transmitting a transport stream including a first video data stream that includes first image data in which there is other image data that is linked for a predetermined purpose,
wherein the transport stream includes the first data as image data that is included in the first video data stream, and includes a control signal with information indicating an obtainment source of the other image data.

2. The image data transmission device according to Claim 1,
wherein a picture format of the other image data is a same as or different from a picture format of the first image data, and
the control signal also has picture format information of the first image data and the other image data.

3. The image data transmission device according to Claim 1,
wherein the first image data and the other image data that is linked to the first image data configure stereo stereoscopic image data.

4. The image data transmission device according to Claim 1,
wherein a program map table as program specific information indicating to which program each elementary stream included in the transport stream belongs, is included in the transport stream, and
the control signal is inserted under the program map table.

5. The image data transmission device according to Claim 1,
wherein when the obtainment source included in the control signal is a same service,
the transport stream includes a second video data stream including the other image data, and
the control signal further includes information indicating a combination of the first video data stream and the second video data stream.

6. The image data transmission device according to Claim 1,
wherein an encoding system of the first image data is MPEG2video, and an encoding system of the other image data is MPEG4-AVC.

7. The image data transmission device according to Claim 1,
wherein the first video data stream selectively includes the first image data or second image data in which there is no other image data that is linked, and
the first video data stream includes identification information that identifies whether the included image data is the first image data or the second image data in units of frames.

8. The image data transmission device according to Claim 7,
wherein the identification information is inserted into a header of each picture of the first video data stream.

9. An image data transmission method comprising:
a stream generation step of generating a transport stream including a video data stream including first image data in which there is other image data that is linked for a predetermined purpose;
a control signal insertion step of including the first image data as image data included in the video data stream and inserting a control signal with information indicating an obtainment source of the other image data in a transport stream generated in the stream generation step; and
a data transmission step of transmitting the transport stream into which the control signal is inserted in the control signal insertion step.

10. An image data reception device comprising:
a data reception unit receiving a transport stream including a video data stream including first image data in which there is other image data that is linked for a predetermined purpose,
wherein the transport stream includes the first data as image data included in the video data stream and includes a control signal with information indicating an obtainment source of the other image data,
the image data reception device further including
a first data obtainment unit that obtains the first image data from the transport stream received by the data reception unit,
a second data obtainment unit that obtains the other image data from the obtainment source based on the control signal included in the transport stream received by the data reception unit, and
a data processing unit that links and processes the first image data obtained by the first data obtainment unit and the other image data obtained by the second data obtainment unit.

11. The image data reception device according to Claim 10,
wherein a picture format of the other image data is a same or different from a picture format of the first image data,
the image data reception device further comprising:
a picture format adjustment unit that matches the picture format of the first image data obtained by the first data obtainment unit with the picture format of the other image data obtained by the second data obtainment unit.

12. The image data reception device according to Claim 10,
wherein the video data stream selectively includes the first image data and second image data in which there is no other image data that is linked,
the video data stream includes identification information that identifies whether the included image data is the first image data or the second image data in units of frames,
the image data reception device further including
a control unit that controls operations of the second data obtainment unit and the data processing unit based on the identification information included in the video data stream.

13. An image data reception method comprising:
a data reception step of receiving a transport stream including a video data stream including first image data in which there is other image data that is linked for a predetermined purpose,
wherein the transport stream includes the first data as image data included in the video data stream and includes a control signal with information indicating an obtainment source of the other image data,
the image data reception method further including
a first data obtainment step of obtaining the first image data from the transport stream received in the data reception step,
a second data obtainment step of obtaining the other image data from the obtainment source based on the control signal included in the transport stream received in the data reception step, and
a data processing step of linking and processing the first image data obtained in the first data obtainment step and the other image data obtained in the second data obtainment step.
